Europäisches Patentamt

European Patent Office

Office européen des brevets

(11) Veröffentlichungsnummer : **0 471 406 B1**

(12) **EUROPÄISCHE PATENTSCHRIFT**

(45) Veröffentlichungstag der Patentschrift :
**02.11.95 Patentblatt 95/44**

(51) Int. Cl.⁶ : **G11B 20/24,** G11B 23/00,
G11B 15/087

(21) Anmeldenummer : **91202022.9**

(22) Anmeldetag : **06.08.91**

(54) **Wiedergabe-Schaltungsanordnung.**

(30) Priorität : **14.08.90 DE 4025671**

(43) Veröffentlichungstag der Anmeldung :
**19.02.92 Patentblatt 92/08**

(45) Bekanntmachung des Hinweises auf die
Patenterteilung :
**02.11.95 Patentblatt 95/44**

(84) Benannte Vertragsstaaten :
**AT BE DE FR GB NL**

(56) Entgegenhaltungen :
**JP-A-63 317 952
PATENT ABSTRACTS OF JAPAN vol. 11, no.
373 (P-643)(2820) 5. Dezember 1987 & JP-A- 62
143 206
PATENT ABSTRACTS OF JAPAN vol. 8, no.
105 (P-274)17. Mai 1984 & JP-A- 59 016 160
PATENT ABSTRACTS OF JAPAN vol. 8, no.
109 (P-275) 22.Mai 1984 & JP-A-59 019 261
PATENT ABSTRACTS OF JAPAN vol. 8, no.
121 (P-278)7. Juni 1984 & JP-A- 59 028 262**

(56) Entgegenhaltungen :
**PATENT ABSTRACTS OF JAPAN vol. 12, no.
309 (P-748)(3156) 23. August 1988 & JP-A- 63
078 376
Handbuch der Magnetbandspeichertechnik;
Christian Scholz; Carl Hanser Verlag München
Wien 1980; S.70-77**

(73) Patentinhaber : **Philips Patentverwaltung
GmbH
Röntgenstrasse 24
D-22335 Hamburg (DE)**
(84) **DE**
Patentinhaber : **Philips Electronics N.V.
Groenewoudseweg 1
NL-5621 BA Eindhoven (NL)**
(84) **BE FR GB NL AT**

(72) Erfinder : **Siebörger, Günther
Lornsenstrasse 131 G
W-2000 Schenefeld (DE)**
Erfinder : **Wenzel, Jörg
Immermannstrasse 12
W-2000 Hamburg 50 (DE)**

(74) Vertreter : **von Laue, Hanns-Ulrich, Dipl.-Ing. et
al
Philips Patentverwaltung GmbH,
Röntgenstrasse 24
D-22335 Hamburg (DE)**

## Beschreibung

Die Erfindung betrifft eine Schaltungsanordnung zur Wiedergabe von auf einem beweglichen Tonträger in einem oder mehreren Tonkanälen aufgezeichneten Toninformationen, wobei der Tonträger während deren Wiedergabe in einer Wiedergabegeschwindigkeit bewegt wird, mit einer Schaltungsanordnung zur Rauschunterdrückung, in welcher je Tonkanal ein RC-Netzwerk mit wenigstens einem RC-Filter vorgesehen ist.

Derartige Schaltungsanordnungen zur Wiedergabe von auf einem Tonträger aufgezeichneten Toninformationen, die eine Schaltungsanordnung zur Rauschunterdrückung aufweisen, haben sich für Tonbandgeräte, insbesondere Kassetten-Rekorder, durchgesetzt. In diesem Beispielsfall handelt es sich bei dem beweglichen Tonträger um ein Magnetband, welches an einem Tonkopf vorbeibewegt wird, dessen Ausgangssignale der Wiedergabe-Schaltunganordnung mit einer Schaltungsanordnung zur Rauschunterdrückung zugeführt werden. Bei einer solchen Schaltungsanordnung kann es sich beispielsweise um eine Rauschunterdrückung nach einem der Dolby-Systeme handeln. Bei diesen werden die Höhen wiedergabeseitig in Abhängigkeit von deren Pegel mehr oder weniger stark abgesenkt, so daß gleichzeitig eine Absenkung des Rauschens, insbesondere des Tonbandes, vorgenommen wird. Derartige Rauschunterdrückungs-Schaltungen benötigen verschiedene Filter mit verschiedenen Zeitkonstanten. Dazu ist jeweils pro Tonkanal wenigstens ein RC-Netzwerk vorgesehen, welches ein oder mehrere RC-Filter aufweist. Schaltungsanordnungen dieser Art sind in vielen Ausführungsvarianten bekannt Siehe z. B. "Handbuch der Magnetbandspeichertechnik" von Christian Holz, Carl Hanser Verlag, München Wien 1980, S. 69-77, insbesondere : Kapitel 2.5, Figur. Anspruch 1 ist gegen dieses Dokument abgegrenzt.

Darüber hinaus sind Schaltungsanordnungen bekannt, welche dazu dienen, bei gegenüber der normalen Wiedergabegeschwindigkeit des Tonträgers erhöhter Bewegungsgeschwindigkeit Pausen in den Toninformationen zu erkennen. In dem oben erwähnten Beispiel des Kassetten-Tonbandgerätes bedeutet dies, daß das Tonband beispielsweise mit Umspulgeschwindigkeit bewegt wird, wobei der Tonkopf ähnlich wie bei Wiedergabegeschwindigkeit Toninformationen vom Band ausliest. In diesem Falle sollen jedoch nicht die Toninformationen als solche ausgewertet werden, sondern es soll festgestellt werden, wann in den Toninformationen Pausen auftreten. Auf diese Weise können beispielsweise einzelne Musiktitel auf dem Band geortet werden. Derartige Pausenerkennungs-Schaltungsanordnungen sind ebenfalls in vielfacher Ausführung bekannt Siehe z.B. JP-A- 63 317 952.

Es ist Aufgabe der Erfindung, eine Wiedergabe-Schaltungsanordnung der eingangs genannten Art zu schaffen, in welche eine Pausenerkennungs-Schaltungsanordnung mit möglichst geringem Schaltungsaufwand integriert ist.

Diese Aufgabe ist erfindungsgemäß dadurch gelöst, daß in der Wiedergabe-Schaltungsanordnung eine Pausenerkennungs-Schaltungsanordnung vorgesehen ist, welche Teile der Rauschunterdrückungs-Schaltung, wenigstens eines oder mehrere RC-Filter des bzw. der RC-Netzwerke(s) der Rauschunterdrückungs-Schaltung, während der Zeiten mitnutzt, in denen durch die Pausenerkennungs-Schaltung bei gegenüber der Wiedergabegeschwindigkeit erhöhter Bewegungsgeschwindigkeit des Tonträgers Pausen in den Toninformationen erkannt werden sollen.

Die erfindungsgemäße Pausenerkennungs-Schaltungsanordnung nutzt also einzelne Teile der Rauschunterdrückungs-Schaltung mit, d.h. diese Teile müssen in der Pausenerkennungs-Schaltungsanordnung nicht zusätzlich vorhanden sein. Bei diesen mitgenutzten Elementen der Rauschunterdrückungs-Schaltung handelt es sich insbesondere um eines oder mehrere RC-Filter des bzw. der RC-Netzwerke der Rauschunterdrückungs-Schaltungsanordnung. Derartige RC-Filter sind in Rauschunterdrückungs-Schaltungen immer erforderlich und können von der Pausenerkennungs-Schaltungsanorndung mitgenutzt werden, da die betreffenden RC-Filter in der Rauschunterdrückungs-Schaltungsanordnung nur während der Wiedergabe der Toninformation in Wiedergabegeschwindigkeit benötigt werden, nämlich um dann das Rauschen in den Toninformationen herabzusetzen. Sollen jedoch bei gegenüber der Wiedergeschwindigkeit erhöhter Bewegungsgeschwindigkeit des Tonträgers Pausen in den Toninformationen erkannt werden, so können diese Filter von der Pausenerkennungs-Schaltungsanordnung mitgenutzt werden, da während dieser Zeit die Rauschunterdrückungs-Schaltungsanordnung nicht aktiv sein muß und daher diese Filter von der Pausenerkennungs-Schaltungsanordnung genutzt werden können. Es liegt also eine zeitlich wechselweise Nutzung dieser RC-Filter oder auch weiterer Teile der Rauschunterdrückungs-Schaltung vor.

Die Zeitkonstanten der in der Rauschunterdrückungs-Schaltung vorgesehenen RC-Filter sind zwar relativ klein, diese Zeitkonstanten genügen jedoch für die Auswertung der Pausen durch die Pausenerkennungs-Schaltungsanordnung, da die Toninformationen bei gegenüber der Wiedergabegeschwindigkeit erhöhter Bewegungsgeschwindigkeit des Tonträgers in höhere Frequenzen transformiert werden und somit kleinere Zeitkonstanten ausreichen.

Die doppelte Nutzung der RC-Filter sowohl durch die Rauschunterdrückungs-Schaltungsanordnung wie auch durch die Pausenerkennungs-Schaltungsanordnung fällt deshalb besonders ins Gewicht, weil insbesondere die dazu notwendigen Kondensatoren schlecht integrierbar sind. Die Kondensatoren müssen als diskrete Bauelemente vorgesehen sein, verursachen also gegenüber integrierten Schaltungen relativ hohe Kosten. Durch die doppelte Nutzung der RC-Filter kann die Zahl dieser diskreten Bauelemente verringert werden.

Nach einer Ausgestaltung der Erfindung ist vorgesehen, daß es sich bei dem bzw. den RC-Filtern um RC-Tiefpaßfilter handelt. In Rauschunterdrückungs-Schaltungen der oben genannten Art handelt es sich bei den dort vorhandenen RC-Filtern meist ohnehin um RC-Tiefpaßfilter, die sich für die Auswertung von Pausen durch die Pausenerkennungs-Schaltung besonders eignen.

Nach einer weiteren Ausgestaltung der Erfindung ist vorgesehen, daß in der Pausenerkennungs-Schaltung ein erster und ein zweiter Komparator vorgesehen sind, daß die Tonsignale zur Pausenerkennung einem ersten RC-Tiefpaßfilter zugeführt werden, in welchem sie geglättet werden und welchem der erste Komparator (43) nachgeschaltet ist, in dem die geglätteten Tonsignale mit einer ersten Vergleichsspannung verglichen werden und dessen Ausgangssignal einem RC-Tiefpaßfilter (34 und 35) zugeführt wird, dem der zweite Komparator (44) nachgeschaltet ist, in welchem ein Vergleich mit einer zweiten Vergleichsspannung vorgenommen wird und dessen Ausgangssignal erkannte Pausen signalisiert.

Die Tonsignale, welche bei gegenüber der Wiedergabegeschwindigkeit erhöhter Bewegungsgeschwindigkeit des Tonträgers von diesem ausgelesen werden, sind in dieser Form zur Pausenerkennung noch nicht geeignet. Sie werden daher zunächst einem ersten RC-Tiefpaßfilter zugeführt, welches in einem RC-Netzwerk der Rauschunterdrückungs-Schaltungsanordnung ohnehin vorgesehen ist. In diesem ersten RC-Tiefpaßfilter werden diese Tonsignale geglättet. Die so geglätteten Tonsignale werden dem ersten Komparator zugeführt, in welchem sie mit einer ersten Vergleichsspannung verglichen werden. Dieser erste Komparator gibt während der Zeiten ein Ausgangssignal ab, in denen die geglätteten Toninformationen die Vergleichsspannung unterschreiten. Das Ausgangssignal dieses Komparators gibt also quasi an, wann Pausen in den Toninformationen vorliegen. Da auch beispielsweise während Musiktiteln kurze Pausen auftreten können, kann das Ausgangssignal dieses Komparators noch nicht zur Pausenerkennung eingesetzt werden. Es wird daher einem weiteren RC-Tiefpaßfilter zugeführt, welches ebenso wie das erste Bestandteil eines RC-Netzwerkes der Rauschunterdrückungs-Schaltungsanordnung ist. Die Zeitkonstante dieses zweiten RC-Tiefpaßfilters ist größer gewählt als die des ersten RC-Tiefpaßfilters und ist so gewählt, daß das durch sie geglättete Ausgangssignal des ersten Komparators in einem zweiten Komparator eine zweite Vergleichsspannung nur dann überschreitet, wenn eine längere Pause in den Toninformationen vorliegt. Das zweite RC-Tiefpaßfilter hat also die Aufgabe, kurzzeitige Lücken in den Toninformationen während Musiktiteln zu glätten, während längere Pausen bewirken, daß die geglättete Ausgangsspannung des RC-Tiefpaßfilters die zweite Vergleichsspannung unterschreitet, so daß während dieser Zeiten der zweite Komparator ein Ausgangssignal abgibt, das eine erkannte Pause signalisiert.

Bei diesem Aufbau der erfindungsgemäßen Schaltungsanordnung wird deutlich, daß in der Pausenerkennungs-Schaltungsanordnung zwei Komparatoren erforderlich sind, daß jedoch die darüber hinaus erforderlichen RC-Tiefpaßfilter eingespart werden können, da diese Filter in der Rauschunterdrückungs-Schaltungsanordnung ohnehin vorhanden sind und durch die Pausenerkennungs-Schaltung mitgenutzt werden können.

Eine vorteilhafte Weiterbildung der Erfindung sieht vor, daß aus den Tonsignalen beider Tonkanäle durch Addition ein Mono-Tonsignal gebildet wird, das in der Phasenerkennungsschaltung verarbeitet wird, und daß als erstes Tiefpaßfilter eines des RC-Netzwerkes des einen Tonkanals der Rauschunterdrückungs-Schaltung und als zweites Tiefpaßfilter eines des RC-Netzwerkes des anderen Tonkanals der Rauschunterdrückungs-Schaltung eingesetzt wird.

Sind zwei Tonkanäle vorgesehen, handelt es sich also um Stereo-Toninformationen, so wird aus den beiden Tonsigalen ein Mono-Tonsignal durch Addition gebildet. Dieses Signal wird in der Pausenerkennungs-Schaltung weiterverarbeitet und zur Pausenerkennung herangezogen. Da es sich um ein Stereo-Tonsignal handelt, sind in der Wiedergabeschaltungsanordnung einschließlich der Schaltungsanordnung zur Rauschunterdrückung zwei Tonkanäle vorgesehen. Somit weist die Rauschunterdrückungsschaltung zwei RC-Netzwerke auf. In diesem Falle ist es vorteilhaft, das erste Tiefpaßfilter des RC-Netzwerkes des einen Tonkanals und als zweites Tiefpaßfilter eines des RC-Netzwerkes des zweiten Tonkanals heranzuziehen. Da in beiden RC-Netzwerken meist mehrere Tiefpaßfilter vorgesehen sind, kann für beide Tiefpaßfilter die gewünschte Zeitkonstante aus den vorhandenen ausgewählt werden. Nach einer Weiterbildung dieser Schaltungsanordnung ist vorgesehen, daß in den RC-Netzwerken der beiden Tonkanäle je zwei RC-Tiefpaßfilter mit verschieden großen Zeitkonstanten vorgesehen sind, und das als erstes Tiefpaßfilter dasjenige des einen Tonkanals, das die kleinere Zeitkonstante aufweist, und als zweites Tiefpaßfilter dasjenige des anderen Tonkanals, das alte größere Zeitkonstante aufweist, eingesetzt wird.

Wie oben bereits angedeutet, weist das erste Tiefpaßfilter vorteilhafter Weise eine kleinere Zeitkonstante auf als das zweite Tiefpaßfilter. Da in den RC-Netzwerken der beiden Tonkanäle meist ohnehin wenigstens zwei RC-Tiefpaßfilter mit verschieden großen Zeitkonstanten vorgesehen sind, kann vorteilhaft das erste Tiefpaßfilter des RC-Netzwerkes des einen Kanals mit der kleineren Zeitkonstante herangezogen werden und als zweites Tiefpaßfilter dasjenige des anderen Tonkanals mit der größeren Zeitkonstante.

Dies ist insbesondere dann vorteilhaft, wenn weitere Elemente der Rauschunterdrückungs-Schaltungsanordnung in den beiden Tonkanälen mitgenutzt werden sollen. Dazu ist in einer weiteren Ausgestaltung der Erfindung vorgesehen, daß in beiden Tonkanälen der Rauschunterdrückungs-Schaltung den RC-Netzwerken jeweils eine Gleichrichter-Schaltung vorgeschaltet ist, welche von der Pausenerkennungs-Schaltung mitgenutzt wird. Da die beiden Tiefpaßfilter ohnehin in RC-Netzwerken verschiedener Tonkanäle der Rauschunterdrückungs-Schaltungsanordnung vorgesehen sind, können die Gleichrichter-Schaltungen mitgenutzt werden, ohne daß eine gegenseitige Beeinflussung der Signale stattfindet.

Entsprechendes gilt auch für weitere in der Rauschunterdrückungs-Schaltung vorgesehene Schaltungselemente, beispielsweise Verstärker. Dazu ist nach einer Ausgestaltung vorgesehen, daß wenigstens einige in der Rauschunterdrückungs-Schaltung vorgesehene Verstärker von der Pausenerkennungsschaltung mitgenutzt werden.

Als Rauschunterdrückungs-Schaltungen sind insbesondere solche des Dolby B- oder C-Typs verbreitet. Derartige Rauschunterdrückungs-Schaltungen weisen immer je Kanal wenigstens zwei RC-Tiefpaßfilter auf, welche von der Pausenerkennungs-Schaltungsanordnung mitgenutzt werden können.

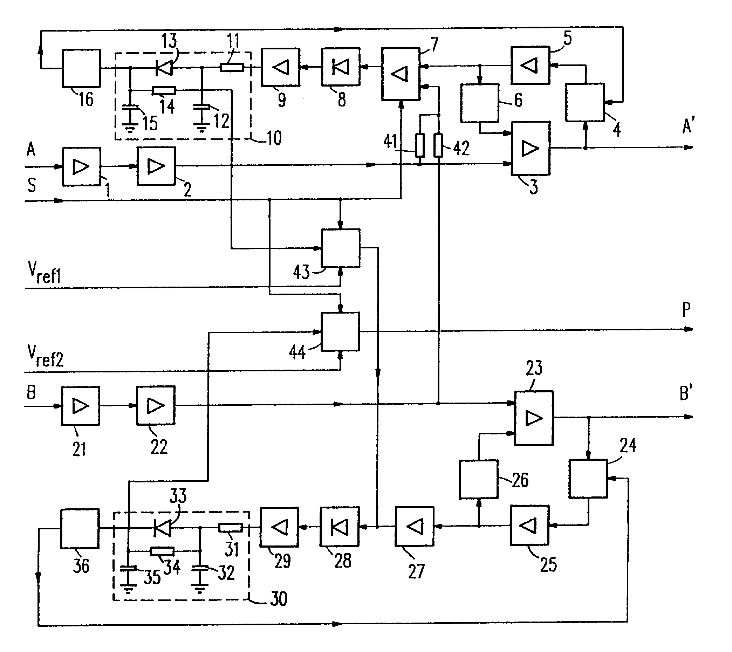

Im folgenden wird anhand der Figur ein Ausführungsbeispiel der Erfindung näher erläutert. Die Figur zeigt dazu eine Wiedergabe-Schaltungsanordnung in Stereo-Ausführung, also mit zwei Tonkanälen. In die Wiedergabe-Schaltungsanordnung ist eine Rauschunterdrückungs-Schaltung des Dolby B-Typs integriert. Ferner ist erfindungsgemäß eine Pausenerkennungs-Schaltungsanordnung vorgesehen, welche verschiedene Elemente der Rauschunterdrückungs-Schaltungsanordnung mitnutzt. Der in der Figur dargestellten Wiedergabe-Schaltungsanordnung wird ein Stereo-Tonsignal mit den Tonkanälen A und B zugeführt. Dieses Stereo-Signal kann beispielsweise von einem Kassetten-Tonband stammen, von dem es mittels eines in der Figur nicht dargestellten Tonkopfes ausgelesen wurde.

Die in der Figur dargestellte Wiedergabe-Schaltungsanordnung weist, bezüglich der Rauschunterdrückungs-Schaltungsanordnung, zwei völlig identische Tonkanäle auf, von denen im folgenden exemplarisch einer näher beschrieben werden soll.

Das Tonsignal des Kanales A, das von einem Tonkopf stammt, wird zunächst einem Kopfverstärker 1 zugeführt, in welchem die sehr schwachen von dem Tonkopf stammenden Tonsignale zunächst vorverstärkt werden. Das Ausgangssignal dieses Kopfverstärkers 1 gelangt an einen Entzerrerverstärker 2, in welchem eine Entzerrung der Tonsignale vorgenommen wird. Dies ist erforderlich, da die Tonsignale auf ein Band meist mit einer Vorverzerrung, auch Preemphasis genannt, aufgezeichnet werden. Bei der Wiedergabe muß dann diese frequenzmäßige Verzerrung wieder rückgängig gemacht werden. Dies wird meist als Deemphasis bezeichnet. Die so entzerrten Ausgangssignale des Verstärkers 2 gelangen an einen weiteren Verstärker 3, der frequenzlinear arbeitet und der quasi den sogenannten Hauptpfad der Rauschunterdrückungs-Schaltungsanordnung darstellt, bei der es sich um eine des Dolby B-Typs handelt.

Die Rauschunterdrückungs-Schaltungsanordnung weist neben diesem erwähnten Hauptpfad, der von dem Verstärker 3 gebildet wird, auch einen Nebenpfad auf, in welchem die pegel- und frequenzabhängige Absenkung der Höhensignale vorgenommen wird.

In der Darstellung gemäß der Figur wird dieser Nebenpfad von einem Filter 4 mit variabler Dämpfungscharakteristik, einem Verstärker 5 und einem Begrenzer 6 gebildet. Dem Filter 4 mit variabler Dämpfungscharakteristik wird das Ausgangssignal des Verstärkers 3 zugeführt. Dem Filter 4 wiederum ist der Verstärker 5 nachgeschaltet, dessen Ausgangssignale auf den Begrenzer 6 gelangen. Die Ausgangssignale des Begrenzers 6 ihrerseits sind einem weiteren Eingang des Verstärkers 3 zugeführt und gelangen so also wieder in den Hauptzweig der Rauschunterdrückungs-Schaltungsanordnung. Das Ausgangssignal des Verstärkers 3 stellt das Ausgangssignal A' dieses Kanals der Wiedergabe-Schaltungsanordnung dar.

Das Filter 4 weist eine variable Dämpfungscharakteristik auf, die insbesondere bezüglich ihrer Einsatzfrequenz steuerbar ist. Die Steuerung dieser Einsatzfrequenz der Dämpfungscharakteristik wird von einem Regelzweig der Rauschunterdrückungs-Schaltungsanordnung vorgenommen, welche ebenfalls kanalweise getrennt vorhanden ist.

In diesem Regelzweig ist zunächst ein eine feste frequenzabhängige Kennlinie aufweisender Verstärker 7 vorgesehen. Diesem Verstärker ist eine Gleichrichterschaltung 8 nachgeschaltet, deren Ausgangssignal einen linearen Verstärker 9 durchläuft. Dem Verstärker 9 ist ein RC-Netzwerk 10 nachgeschaltet, welches zwei RC-Tiefpaßfilter aufweist. Ein erstes RC-Tiefpaßfilter ist aus einem Widerstand 11 und einem hinter diesem gegen Masse geschalteten Kondensator 12 aufgebaut. An dem Verbindungspunkt zwischen dem Widerstand 11 und dem Kondensator 12 kann das Ausgangssignal dieses ersten RC-Tiefpaßfilters abgenommen werden.

4

Dieser Punkt ist sowohl mit einer Anode einer Diode 13, wie auch mit dem einen Anschluß eines Widerstandes 14 verbunden. Der andere Anschluß dieses Widerstandes 14 sowie die Kathode der Diode 13 sind mit einem Anschluß mit einem Kondensator 15 verbunden, dessen anderer Anschluß mit Masse verbunden ist. Der Widerstand 14 und der Kondensator 15 bilden ein zweites RC-Tiefpaßfilter, dessen Ausgangssignal an dem Verbindungspunkt dieser beiden Bauelemente abgenommen werden kann. Die Diode 13 dient dazu, bei relativ hohen Pegeln des Tonsignals den Widerstand 14 kurzzuschalten und somit das zweite Tiefpaßfilter außer Funktion zu setzen. Diese Funktion ist für die Rauschunterdrückungs-Schaltung des Typs Dolby B erforderlich.

Den beiden RC-Tiefpaßfiltern ist ein Spannungs-/Strom-Wandler 16 nachgeschaltet, dessen Ausgangssignal dazu dient, das Filter 4 bezüglich seiner variablen Dämpfungscharakteristik zu steuern. Dies geschieht in der für Rauschunterdrückungsschaltungen des Dolby B-Typs bekannten Weise, nach der eine Absenkung der Höhen in dem Tonsignal in Abhängigkeit von deren Pegel vorgenommen wird. Darüber hinaus ist auch der Einsatzpunkt der Dämpfungscharakteristik im Höhenbereich vom Pegelwert des Tonsignals und von dessen Frequenz abhängig. Diese Beeinflussung des Tonsignals wird durch die Schaltungselemente 4, 5 und 6 des Nebenzweigs der Rauschunterdrückungs-Schaltung vorgenommen. Die Steuerung des Filters 4 in diesem Nebenzweig wiederum wird in Abhängigkeit des Ausgangssignals des Spannungs-/Strom-Wandlers 16 des Regelzweigs der Rauschunterdrückungs-Schaltung gesteuert.

Neben dem bisher beschriebenen einen Tonkanal der Wiedergabe-Schaltungsanordnung mit integrierter Rauschunterdrückungs-Schaltungsanordnung ist ein zweiter Tonkanal vorgesehen, welcher in identischer Weise aufgebaut ist und welchem das Tonsignal B des zweiten Tonsignals zugeführt wird. Die folgende Liste zeigt zeilenweise die jeweils korrespondierenden Bauelemente der beiden Tonkanäle der Wiedergabe-Schaltungsanordnung:

| Tonkanal A | Tonkanal B |
|---|---|
| Verstärker 1 | Verstärker 21 |
| Entzerrer-Verstärker 2 | Entzerrer-Verstärker 22 |
| Verstärker 3 | Verstärker 23 |
| Filter 4 | Filter 24 |
| Verstärker 5 | Verstärker 25 |
| Begrenzer 6 | Begrenzer 26 |
| Verstärker 7 | Verstärker 27 |
| Gleichrichterschaltung 8 | Gleichrichterschaltung 28 |
| Verstärker 9 | Verstärker 29 |
| RC-Netzwerk 10 | RC-Netzwerk 30 |
| Widerstand 11 | Widerstand 31 |
| Kondensator 12 | Kondensator 32 |
| Diode 13 | Diode 33 |
| Widerstand 14 | Widerstand 34 |
| Kondensator 15 | Kondensator 35 |
| Spannungs-/Stromwandler 16 | Spannungs-/Stromwandler 36. |

Diese Elemente des Tonkanals B der Wiedergabeschaltungsanordnung sind völlig identisch mit den entsprechenden des Tonkanals A mit der einzigen Ausnahme, daß der Verstärker 27 im Gegensatz zu dem Verstärker 7 nur einen Eingang aufweist.

Im folgenden wird die in die Wiedergabe-Schaltungsanordnung integrierte Pausenerkennungs-Schaltungsanordnung näher beschrieben, welche verschiedene Schaltungsteile der beiden Tonkanäle der Rauschunterdrückungs-Schaltungsanordnung mitnutzt. Insbesondere werden RC-Tiefpaßfilter der beiden RC-Netzwerke der Rauschunterdrückungs-Schaltungsanordnung mitgenutzt. Da es sich bei der Wiedergabe-Schaltungsanordnung um eine solche für Stereo-Tonsignale handelt, welche zwei Tonkanäle aufweist, werden die in den beiden RC-Netzwerken 10 und 30 der beiden Tonkanäle vorgesehenen RC-Tiefpaßfilter in der Weise genutzt, daß als erstes Tiefpaßfilter dasjenige des Tonkanals A und als zweites Tiefpaßfilter dasjenige des Tonkanals B eingesetzt wird.

Die Pausenerkennungs-Schaltungsanordnung der in der Figur dargestellten Wiedergabe-Schaltungsanordnung weist zunächst zwei Widerstände 41 und 42 auf. Diese Widerstände greifen die Tonsignale hinter den beiden Entzerrerverstärkern 2 und 22 ab und addieren sie. Diese auf diese Weise addierten Tonsignale gelangen als Mono-Tonsignal an einen zweiten Eingang des in dem Regelzweig des Tonkanals A vorgesehenen Verstärkers 7, der Signale von diesem Eingang frequenzlinear verstärkt, also nicht mit der frequenzabhängigen Kennlinie verstärkt. Dieses Mono-Tonsignal gelangt im folgenden, verstärkt durch den Verstärker 7, in die Gleichrichterschaltung 8 und anschließend über den Verstärker 9 zu dem RC-Netzwerk 10 des Tonkanals A. In diesem durchläuft es das erste RC-Tiefpaßfilter, das aus dem Widerstand 11 und dem Kondensator 12 aufgebaut ist. Das Ausgangssignal dieses RC-Tiefpaßfilters gelangt an einen ersten Komparator 43, in dem dieses Tonsignal mit einer Vergleichsspannung $V_{ref1}$ verglichen wird. Dieses Vergleichsergebnis wird als Ausgangssignal des ersten Komparators 43 in die Gleichrichterschaltung 28 des Tonkanals B der Wiedergabe-Schaltungsanordnung bzw. der Rauschunterdrückungs-Schaltungsanordnung eingespeist. Nach Durchlauf des Gleichrichters 28 gelangt das Signal über den Verstärker 29 in das RC-Netzwerk 30 des Nebenzweigs der Rauschunterdrückungs-Schaltungsanordnung des Tonkanals B. In diesem RC-Netzwerk durchläuft das Tonsignal beide in diesem RC-Netzwerk vorgesehene RC-Tiefpaßfilter, von denen das erste mit dem Widerstand 31 und dem Kondensator 32 und das zweite mit dem Widerstand 34 und dem Kondensator 35 aufgebaut ist. Am Ausgang des zweiten RC-Tiefpaßfilters dieses Tonkanals wird das Signal wieder entnommen und einem zweiten Komparator 44 zugeführt, in dem dieses Signal mit einer zweiten Vergleichsspannung $V_{ref2}$ verglichen wird. Das Ausgangssignal dieses zweiten Komparators ist in der Figur mit P bezeichnet und signalisiert die in dem Tonsignal erkannten Pausen.

Die beiden Komparatoren 43 und 44 sowie der Verstärker 7 des Regelzweigs der Rauschunterdrückungs-Schaltung des Tonkanals A sind mittels eines Steuersignals S umschaltbar. Bei normaler Tonwiedergabe, bei der der Tonträger, in diesem Falle das Magnetband, mit der Wiedergabegeschwindigkeit bewegt wird, also in der Zeit, in der eine normale Tonwiedergabe stattfinden soll, ist das Schaltsignal S nicht aktiv, so daß die beiden Komparatoren 43 und 44 ausgeschaltet sind und ferner der Verstärker 7 auf denjenigen Eingang geschaltet ist, an den ihm das Ausgangssignal des Verstärkers 5 des Nebenzweigs der Rauschunterdrückungsschaltung des Tonkanals A zugeführt wird. Der Verstärker 7 arbeitet in diesem Fall mit frequenzabhängiger Kennlinie. Der zweite Eingang des Verstärkers 7, an dem das Mono-Tonsignal der beiden Tonkanäle anliegt, ist in diesem Falle gesperrt. Die Wiedergabe-Schaltungsanordnung arbeitet also in gewohnter Weise. Entsprechendes gilt für die Rauschunterdrückungs-Schaltungsanordnung, welche ohne Beeinflussung durch die Pausenerkennungs-Schaltungsanordnung arbeitet.

Die Pausenerkennungs-Schaltungsanordnung wird mittels des Schaltsignales S nur in den Zeiten aktiv geschaltet, in denen die Rauschunterdrückungs-Schaltungsanordnung nicht aktiv sein muß, dabei handelt es sich insbesondere um die Zeiten, während denen der Tonträger mit gegenüber der Wiedergabegeschwindigkeit erhöhter Geschwindigkeit bewegt wird. In diesen Zeiten ist eine Tonwiedergabe nicht erforderlich oder sogar nicht gewünscht. Während dieser Zeiten wird nun die Pausenerkennungs-Schaltungsanordnung, sofern gewünscht, mittels des Signals S aktiv geschaltet. Dies bedeutet, daß der Verstärker 7 nunmehr auf seinen zweiten Eingang geschaltet wird, an dem ihm das Mono-Tonsignal von den beiden Widerständen 41 und 42 zugeführt wird. Dieses Mono-Signal wird in dem Verstärker 7 nunmehr linear, also nicht in Abhängigkeit der frequenzabhängigen Kennlinie, verstärkt, in der Gleichrichterschaltung 8 gleichgerichtet, und nach weiterer Verstärkung durch den Verstärker 9 gelangt es zu dem RC-Netzwerk 10 dieses Tonkanals der Rauschunterdrückungs-Schaltungsanordnung. Das Signal wird bereits hinter dem ersten RC-Tiefpaßfilter, das aus den Elementen 11 und 12 aufgebaut ist, wieder abgegriffen. Dieses RC-Tiefpaßfilter hat eine kleinere Zeitkonstante als das zweite RC-Tiefpaßfilter mit den Elementen 14 und 15. Die kleinere Zeitkonstante dieses RC-Tiefpaßfilters genügt jedoch, das gleichgerichtete und hochverstärkte Mono-Tonsignal zunächst zu glätten. Dieses so geglättete Tonsignal gelangt an den ersten Komparator 43 und wird dort mit der ersten Vergleichsspannung $V_{ref1}$ verglichen. Es wird hier festgestellt, wann das geglättete Tonsignal einen vorgegebenen Schwellwert unterschreitet, wann also mit großer Wahrscheinlichkeit eine Pause vorliegt. Dieses Ausgangssignal des ersten Komparators 43 kann noch nicht unmittelbar ausgewertet werden, da mitunter auch während beispielsweise Musiksignalen kurzzeitige Pausen auftreten, bei denen es sich jedoch noch nicht um Pausen zwischen Musiktiteln handelt, die ja erkannt werden sollen. Daher wird das Ausgangssignal des Komparators 43 einer weiteren Glättung unterzogen. Dazu wird es in dem Regelzweig der Rauschunterdrückungs-Schaltung des Tonsignals B zunächst durch den Gleichrichter 28 gleichgerichtet und nach Verstärkung durch den Verstärker 29 dem RC-Netzwerk 30 des Tonkanals B der Rauschunterdrückungs-Schaltungsanordnung zugeführt. In diesem RC-Netzwerk 30 durchläuft dieses Signal beide vorgesehenen RC-Tiefpaßfilter, das Signal wird also im Ergebnis einer Tiefpaßfilterung entsprechend der Zeitkonstante des zweiten RC-Tiefpaßfilters, das aus den Bauelementen 34 und 35 aufgebaut ist, unterzogen. Dabei kann beim Aufladen der Kapazität 35 die Diode zeitweise leitend werden, so daß dann ein beschleunigtes Laden der Kapazität 35 stattfindet. Das also mit der Zeitkonstante des zweiten RC-Tiefpaßfilters des RC-Netzwerkes 30 geglättete Ausgangssignal des Komparators 43 wird dem zweiten Komparator 44 zugeführt, in dem dieses nochmals geglättete Signal mit der zweiten Vergleichsspannung $V_{ref2}$ verglichen wird. Die zweite Glättung, welche mit größerer Zeitkonstante erfolgt, als die erste Glättung dient nun vor allem dazu, längere Pausen in dem geglätteten Tonsignal festzustellen. Liegt eine solche vor, so gibt der zweite Komparator 44 ein entsprechendes Ausgangssignal, das in der Figur mit P bezeichnet ist. Tritt dieses Ausgangssignal auf, so liegt eine Pause in den von dem Tonträger ausgelesenen Toninformationen vor.

Während der Zeiten, in denen die Pausenerkennungs-Schaltungsanordnung mittels des Schaltsignals S aktiv geschaltet wird, kann, ebenfalls ausgelöst durch dieses Schaltsignal S, in in der Figur nicht dargestellter Weise eine Abschaltung der Verstärker 5 und 25 der beiden Tonkanäle vorgenommen werden. Damit wird sichergestellt, daß Tonsignale die Funktion der Pausenerkennungs-Schaltungsanordnung nicht beeinflussen.

Bei der in der Figur dargestellten Ausführungsform der Erfindung werden nicht nur die RC-Netzwerke 10 und 30 der Schaltungsanordnung zur Rauschunterdrückung von der Pausenerkennungs-Schaltungsanordnung mitgenutzt, sondern entsprechendes gilt auch für die Verstärker 7, 9, 29 sowie die Gleichrichterschaltungen 8 und 28. Es tritt somit für die Pausenerkennungs-Schaltungsanordnung eine erhebliche Einsparung an Bauelementen ein, da die genannten Bauelemente der Schaltungsanordnung zur Rauschunterdrückung mitgenutzt werden können und nicht für die Pausenerkennungs-Schaltungsanordnung nochmals vorgesehen werden müssen. Die Pausenerkennungs-Schaltungsanordnung benötigt neben dem doppelt genutzten Schaltungselementen der Schaltungsanordnung zur Rauschunterdrückung nur noch die beiden Komparatoren 43 und 44.

## Patentansprüche

1. Schaltungsanordnung zur Wiedergabe von auf einem beweglichen Tonträger in einem oder mehreren Tonkanälen aufgezeichneten Toninformationen, wobei der Tonträger während deren Wiedergabe in einer Wiedergabegeschwindigkeit bewegt wird, mit einer Schaltungsanordnung zur Rauschunterdrückung, in welcher je Tonkanal ein RC-Netzwerk (10, 30) mit wenigstens einem RC-Filter vorgesehen ist,
dadurch gekennzeichnet, daß in der Wiedergabe-Schaltungsanordnung eine Pausenerkennungs-Schaltungsanordnung vorgesehen ist, welche Teile der Rauschunterdrückungs-Schaltung, wenigstens eines oder mehrere RC-Filter des bzw. der RC-Netzwerke(s) (10, 30) der Rauschunterdrückungs-Schaltung, während der Zeiten mitnutzt, in denen durch die Pausenerkennungs-Schaltung bei gegenüber der Wiedergabegeschwindigkeit erhöhter Bewegungsgeschwindigkeit des Tonträgers Pausen in den Toninformationen erkannt werden sollen.

2. Schaltungsanordnung nach Anspruch 1,
dadurch gekennzeichnet, daß es sich bei dem bzw. den RC-Filtern um RC-Tiefpaßfilter handelt.

3. Schaltungsanordnung nach Anspruch 2,
dadurch gekennzeichnet, daß in der Pausenerkennungs-Schaltung ein erster und ein zweiter Komparator (43, 44) vorgesehen sind, daß die Tonsignale zur Pausenerkennung einem ersten RC-Tiefpaßfilter (11 und 12) zugeführt werden, in welchem sie geglättet werden und welchem der erste Komparator (43) nachgeschaltet ist, in dem die geglätteten Tonsignale mit einer ersten Vergleichsspannung verglichen werden und dessen Ausgangssignal einem RC-Tiefpaßfilter (34 und 35) zugeführt wird, dem der zweite Komparator (44) nachgeschaltet ist, in welchem ein Vergleich mit einer zweiten Vergleichsspannung vorgenommen wird und dessen Ausgangssignal erkannte Pausen signalisiert.

4. Schaltungsanordnung nach Anspruch 3 mit zwei Tonkanälen,
dadurch gekennzeichnet, daß aus den Tonsignalen beider Tonkanäle durch Addition ein Mono-Tonsignal gebildet wird, das in der Pausenerkennungs-Schaltung verarbeitet wird, und daß als erstes Tiefpaßfilter (11 und 12) eines des RC-Netzwerkes (10) des einen Tonkanals der Rauschunterdrückungs-Schaltung und als zweites Tiefpaßfilter (34 und 35) eines des RC-Netzwerkes (30) des anderen Tonkanals der Rauschunterdrückungs-Schaltung eingesetzt wird.

5. Schaltungsanordnung nach Anspruch 4,
dadurch gekennzeichnet, daß in den RC-Netzwerken (10, 30) der beiden Tonkanäle je zwei RC-Tiefpaßfilter (11 und 12, 14 und 15, 31 und 32, 34 und 35) mit verschieden großen Zeitkonstanten vorgesehen sind, und daß als erstes Tiefpaßfilter (11 und 12) dasjenige des einen Tonkanals, das die kleinere Zeitkonstante aufweist, und als zweites Tiefpaßfilter (34 und 35) dasjenige des anderen Tonkanals, das die größere Zeitkonstante aufweist, eingesetzt wird.

6. Schaltungsanordnung nach einem der Ansprüche 2 bis 5,
dadurch gekennzeichnet, daß in beiden Tonkanälen der Rauschunterdrückungs-Schaltung den RC-Netzwerken (10, 30) jeweils eine Gleichrichter-Schaltung (8, 28) vorgeschaltet ist, welche von der Pausenerkennungs-Schaltung mitgenutzt wird.

7. Schaltungsanordnung nach einem der Ansprüche 2 bis 6,
dadurch gekennzeichnet, daß wenigstens einige in der Rauschunterdrückungs-Schaltung vorgesehene Verstärker (7, 9, 29) von der Pausenerkennungsschaltung mitgenutzt werden.

8. Schaltungsanordnung nach einem der Ansprüche 2 bis 7,
dadurch gekennzeichnet, daß es sich bei der Rauschunterdrückungs-Schaltung um eine des Dolby B-oder C-Typs handelt.

## Claims

1. A circuit arrangement for reproducing audio information recorded in one or a plurality of audio channels on a movable sound carrier, the sound carrier being moved with a reproduction speed during the reproduction of said audio information, which arrangement comprises a noise reduction circuit having in each audio channel an RC network (10, 30) with at least one RC filter,
characterised in that the reproducing circuit arrangement comprises a pause detection circuit which jointly uses parts of the noise reduction circuit, at least one or a plurality of RC filters of the RC network(s) (10, 30) of the noise reduction circuit, during the intervals in which the pause detection circuit should detect pauses in the audio information while the speed of movement of the sound carrier is higher than the reproduction speed.

2. A circuit arrangement as claimed in Claim 1,
characterised in that the RC filter or filters are low-pass RC filters.

3. A circuit arrangement as claimed in Claim 2,
characterised in that the pause detection circuit comprises a first and a second comparator (43, 44), the audio signals are applied for pause detection to a first RC low-pass filter (11 and 12), in which they are filtered and which is followed by the first comparator (43), which compares the filtered audio signals with a first reference voltage and whose output signal is applied to an RC low-pass filter (34 and 35), which is followed by the second comparator (44), which effects a comparison with a second reference voltage and whose output signal indicates detected pauses.

4. A circuit arrangement as claimed in Claim 3, having two audio channels,
characterised in that a mono audio signal is formed by adding the audio signals from the two audio channels together, which mono audio signal is processed in the pause detection circuit, and a low-pass filter of the RC network (10) of one audio channel of the noise reduction circuit is used as a first low-pass filter (11 and 12) and a low-pass filter of the RC network (30) of the other audio channel of the noise reduction circuit is used as a second low-pass filter (34 and 35).

5. A circuit arrangement as claimed in Claim 4,
characterised in that the RC networks (10, 30) of the two audio channels each comprise two RC low-pass filters (11 and 12, 14 and 15, 31 and 32, 34 and 35) having different time constants, and the filter having the smaller time constant of one audio channel is used as the first low-pass filter (11 and 12), and the filter having the larger time constant of the other audio channel is used as the second low-pass filter (34 and 35).

6. A circuit arrangement as claimed in any one of the Claims 2 to 5,
characterised in that a rectifier (8, 28) is arranged before each RC network (10, 30) in the two audio channels of the noise reduction circuit, which rectifier is used jointly by the pause detection circuit.

7. A circuit arrangement as claimed in any one of the Claims 2 to 6,
characterised in that at least several of the amplifiers (7, 9, 29) included in the noise reduction circuit are used jointly by the pause detection circuit.

8. A circuit arrangement as claimed in any one of the Claims 2 to 7,
characterised in that the noise reduction circuit is of the Dolby B type or C type.

**Revendications**

1. Montage de circuit pour la reproduction d'informations audio enregistrées sur un support audio mobile dans un ou plusieurs canaux audio, le support audio étant déplacé au cours de la reproduction à une vitesse de reproduction, avec un montage de circuit pour la suppression du bruit dans lequel un réseau RC (10, 30) comportant au moins un filtre RC est prévu pour chaque canal audio, caractérisé en ce qu'il est prévu dans le montage de circuit de reproduction un montage de circuit d'identification de pauses, qui utilise des parties du circuit de suppression du bruit, au moins un ou plusieurs filtres RC du ou des réseaux RC (10, 30) du circuit de suppression du bruit, au cours des intervalles dans lesquels des pauses dans les informations audio doivent être identifiées par le circuit d'identification de pauses à la vitesse de déplacement du support audio plus élevée que la vitesse de reproduction.

2. Montage de circuit selon la revendication 1, caractérisé en ce que le ou les filtres RC sont constitués de filtres passe-bas RC.

3. Montage de circuit selon la revendication 2, caractérisé en ce qu'il est prévu dans le circuit d'identification de pauses un premier et un deuxième comparateurs, en ce que les signaux audio sont acheminés, pour l'identification de pauses, à un premier filtre passe-bas RC (11 et 12), dans lequel ils sont lissés et en aval duquel est monté le premier comparateur (43), dans lequel les signaux audio lissés sont comparés à une première tension de référence et dont le signal de sortie est acheminé à un filtre passe-bas RC (34 et 35), en aval duquel est monté le deuxième comparateur (44) dans lequel est effectuée une comparaison avec une deuxième tension de référence et dont le signal de sortie signale les pauses identifiées.

4. Montage de circuit selon la revendication 3, comportant deux canaux audio, caractérisé en ce qu'à partir des signaux audio des deux canaux audio, on forme par addition un signal audio mono, qui est traité dans le circuit d'identification de pauses et en ce que l'on utilise comme premier filtre passe-bas (11 et 12) un filtre du réseau RC (10) du premier canal audio du circuit de suppression du bruit et comme deuxième filtre passe-bas (34 et 35) un filtre du réseau RC (30) de l'autre canal audio du circuit de suppression du bruit.

5. Montage de circuit selon la revendication 4, caractérisé en ce que dans les deux réseaux RC (10, 30) des deux canaux audio, respectivement, sont prévus deux filtres passe-bas RC (11 et 12, 14 et 15, 31 et 32, 34 et 35) ayant des constantes de temps de grandeurs différentes, et en ce qu'on utilise, comme premier filtre passe-bas (11 et 12), celui du premier canal audio, qui présente la constante de temps plus petite, et comme deuxième filtre passe-bas (34 et 35), celui de l'autre canal audio qui présente la constante de temps plus grande.

6. Montage de circuit selon l'une quelconque des revendications 2 à 5, caractérisé en ce que, dans les deux canaux audio du circuit de suppression du bruit, on monte en amont des réseaux RC (10, 30), respectivement, un circuit redresseur (8, 28) qui est utilisé conjointement par le circuit d'identification de pauses.

7. Montage de circuit selon l'une quelconque des revendications 2 à 6, caractérisé en ce qu'au moins certains amplificateurs (7, 9, 29) prévus dans le circuit de suppression du bruit sont utilisés conjointement par le circuit d'identification de pauses.

8. Montage de circuit selon l'une quelconque des revendications 2 à 7, caractérisé en ce que le circuit de suppression du bruit est un circuit de type Dolby B ou C.